# EUROPÄISCHE PATENTANMELDUNG

(11) **EP 4 851 037 A1**
(43) Veröffentlichungstag der Anmeldung: **09.12.2026**
(21) Anmeldenummer: 26181862.9
(22) Anmeldetag: 29.05.2026
(51) Int. Cl.: B64C 1/14, E05B 15/02, E05B 47/02, E05B 63/14, E05B 81/14

(54) **VERRIEGELUNGSVORRICHTUNG, LUFTFAHRZEUGTÜR, LUFTFAHRZEUG SOWIE VERFAHREN ZUM VERRIEGELN EINER LUFTFAHRZEUGTÜR UNTER VERWENDUNG EINER DERARTIGEN VERRIEGELUNGSVORRICHTUNG**

(30) Priorität: 07.06.2025 DE 102025001954
(71) Anmelder: Airbus Operations GmbH, 21129 Hamburg (DE)
(72) Erfinder: ROBRECHT, Volker, 21129 Hamburg (DE); HEGENBART, Matthias, 21129 Hamburg (DE)
(74) Vertreter: Isarpatent

(57) **Zusammenfassung**

Die vorliegende Erfindung schafft eine Verriegelungsvorrichtung für eine Luftfahrzeugtür an einer Außenstruktur eines Luftfahrzeugs. Darüber hinaus schafft die Erfindung eine Luftfahrzeugtür mit einer derartigen Verriegelungsvorrichtung sowie ein Luftfahrzeug mit einer derartigen Luftfahrzeugtür. Ferner schafft die vorliegende Erfindung ein Verfahren zum Verriegeln einer Luftfahrzeugtür unter Verwendung einer derartigen Verriegelungsvorrichtung.

## Beschreibung

Die vorliegende Erfindung betrifft eine Verriegelungsvorrichtung für eine Luftfahrzeugtür an einer Außenstruktur eines Luftfahrzeugs sowie eine Luftfahrzeugtür mit einer derartigen Verriegelungsvorrichtung. Darüber hinaus betrifft die vorliegende Erfindung ein Luftfahrzeug mit einer derartigen Luftfahrzeugtür sowie ein Verfahren zum Verriegeln einer Luftfahrzeugtür unter Verwendung einer derartigen Verriegelungsvorrichtung.

Frachttore in einer Rumpfzelle eines Luftfahrzeugs müssen erhebliche umfangsseitige Lasten übertragen. Je größer der Durchmesser einer Rumpfzelle wird, desto höher werden die sich in der Rumpfzellenstruktur ergebenden Umfangslasten. In Abhängigkeit vom Flugzeugtyp können die Umfangskräfte Beträge von mehr als 150.000 N erreichen.

Die Lastübertragung zwischen dem Frachttor und der Rumpfzellenstruktur erfolgt bislang mit einer Vielzahl von schwenkbar auf einer Welle angeordneten Haken, die im Bereich der Rumpfzelle im Wesentlichen horizontal befestigte Wellenabschnitte umgreifen. Aufgrund der zu übertragenden hohen Kräfte sind die Haken und Wellenabschnitte massiv ausgelegt und demzufolge schwer.

Um das selbsttätige Verschwenken der Haken aus der gesicherten Position zu verhindern, weist der Hebelmechanismus zum Verschwenken der Haken mindestens einen Totpunkt auf, der das selbsttätige Zurückverschwenken der Haken auch unter Lasteinwirkung verhindert. Zur zusätzlichen Absicherung der Verriegelung sind separat betätigbare Nocken vorgesehen, die mit der Welle und den darauf angeordneten Haken zusammenwirken und ein Verschwenken der Haken inhibieren.

Die bekannten Verriegelungsvorrichtungen für Frachttore in Flugzeugen, einschließlich des Hebelmechanismus, sind aufwändig und schwer. Darüber hinaus ist die Kraftüberleitung mittels der Haken und der Wellenabschnitte nicht optimal, da zusätzliche Momente entstehen. Schwierigkeiten bereiten zudem ein hoher Anteil an kinematischen Bauteilen sowie ein zusätzliches Moment durch unterschiedliche Drehachsen zwischen den Verriegelungselementen.

Es ist Aufgabe der vorliegenden Erfindung, eine verbesserte Verriegelung für Luftfahrzeugtüren an einem Luftfahrzeug bereitzustellen, wobei hohe Toleranzanforderungen erfüllt werden.

Erfindungsgemäß wird diese Aufgabe jeweils durch die Gegenstände der unabhängigen Ansprüche gelöst.

Gemäß einem ersten Aspekt der Erfindung ist eine Verriegelungsvorrichtung für eine Luftfahrzeugtür an einer Außenstruktur eines Luftfahrzeugs vorgesehen. Die Verriegelungsvorrichtung umfasst einen Pilzzapfen, der einen Schaft zur Montage an einer Außenstruktur eines Luftfahrzeugs und einen Pilzkopf aufweist. Der Pilzkopf ist an einem von der Außenstruktur abgewandten Ende des Schafts angeordnet, wobei sich eine Längsachse des Schafts zwischen der Außenstruktur und dem Pilzkopf erstreckt. Die Verriegelungsvorrichtung umfasst ferner eine Gehäusestruktur zur festen Anbringung an einer Luftfahrzeugtür. Die Gehäusestruktur weist eine Aussparung auf, die zum Einführen des Pilzzapfens ausgebildet ist. Darüber hinaus umfasst die Verriegelungsvorrichtung einen Verschlussmechanismus, der mit der Gehäusestruktur mechanisch gekoppelt ist und den Pilzzapfen in der Aussparung durch Rotieren des Verschlussmechanismus um eine Rotationsachse formschlüssig und kraftschlüssig fixiert.

Gemäß einem zweiten Aspekt der Erfindung ist eine Luftfahrzeugtür, insbesondere ein Frachttor, für ein Luftfahrzeug vorgesehen. Die Luftfahrzeugtür umfasst eine Türstruktur eines Luftfahrzeugs, wobei die Türstruktur mittels eines Scharniers an einer Außenstruktur des Luftfahrzeugs montierbar und relativ zu der Außenstruktur um eine Schwenkachse des Scharniers schwenkbar ist. Das Scharnier ist an einem oberen Endbereich der Türstruktur angeordnet. Ferner umfasst die Luftfahrzeugtür mindestens eine Verriegelungsvorrichtung nach dem ersten Aspekt der Erfindung, wobei die mindestens eine Verriegelungsvorrichtung an einem dem oberen Endbereich abgewandten unteren Endbereich der Türstruktur befestigt ist. Der Pilzzapfen ist an der Außenstruktur fixiert, wobei die Längsachse des Schafts senkrecht zu der Schwenkachse orientiert ist.

Gemäß einem dritten Aspekt der Erfindung ist ein Luftfahrzeug mit einer Luftfahrzeugtür nach dem zweiten Aspekt der Erfindung vorgesehen.

Gemäß einem vierten Aspekt der Erfindung ist ein Verfahren zum Verriegeln einer Luftfahrzeugtür unter Verwendung einer Verriegelungsvorrichtung nach dem ersten Aspekt der Erfindung vorgesehen. Das Verfahren umfasst die folgenden Schritte:
- Einführen des Pilzzapfens in die Aussparung der Gehäusestruktur, wobei der Pilzzapfen an einer Außenstruktur eines Luftfahrzeugs fixiert ist. Die Längsachse des Schafts ist senkrecht zu einer Schwenkachse der Luftfahrzeugtür orientiert.
- Rotieren des Verschlussmechanismus, um den Pilzzapfen in der Aussparung formschlüssig und kraftschlüssig zu fixieren.

Eine der vorliegenden Erfindung zugrunde liegende Idee besteht darin, einen Mechanismus zum Verriegeln, insbesondere Versperren und Arretieren, von Luftfahrzeugtüren, insbesondere Frachttoren, bereitzustellen, der überwiegend für sehr große Türen, zum Beispiel für ein Frachttor im Hauptdeck eines Cargo-Frachters, angewendet werden kann. Das Luftfahrzeug ist vorzugsweise ein Großraum-Frachtflugzeug.

Der Pilzzapfen ist komplementär zu der ihm zugeordneten Aussparung ausgebildet. Im Sinne der vorliegenden Anmeldung umfasst ein Pilzkopf einen größeren Durchmesser oder eine längere Kante quer zu der Längsachse des Schafts als der Schaft. Insbesondere ist der Pilzkopf nicht auf runde Querschnitte oder kuppelartige Formen beschränkt. Der Pilzkopf kann neben einer kuppelartigen Form zum Beispiel eine Quaderform, eine Würfelform, eine zylindrische Form, eine scheibenartige Form oder vergleichbare Formen aufweisen.

Ein Vorteil der vorliegenden Erfindung ist, dass der bestehende Türmechanismus, insbesondere die Lastübertragung und die Führungen, erhalten bleiben können und lediglich die Verriegelung beziehungsweise Verriegelungsvorrichtung ersetzt wird. Insbesondere können verhältnismäßig lange Wellen und Hebel weggelassen werden, so dass sich diese längeren Wellen und Hebel nicht verbiegen können.

Die geringere Anzahl an Bauteilen im Vergleich zu bekannten Verriegelungen kann die Lastübertragung der verriegelten Verriegelungsvorrichtung verbessern. Insbesondere tritt keine Öffnungsneigung bei Belastung der Verriegelungsvorrichtung in tangentialer oder radialer Richtung auf. Weiterhin kann dabei eine Türöffnung verkleinert werden.

Ein weiterer Vorteil der vorliegenden Erfindung liegt darin, dass mit der erfindungsgemäßen Verriegelungsvorrichtung bei verhältnismäßig großen Luftfahrzeugtüren eine Durchbiegung verkleinert werden kann. Damit können Toleranzprobleme verringert werden.

Darüber hinaus kann der erfindungsgemäße Verschlussmechanismus durch eine Lebensdauerschmierung wartungsfreundlich ausgestaltet sein.

Vorteilhafte Ausführungsformen und Weiterbildungen ergeben sich aus den auf die unabhängigen Ansprüche rückbezogenen Unteransprüchen sowie aus der Beschreibung unter Bezugnahme auf die Figuren.

Gemäß einer Ausführungsform der Erfindung umfasst der Verschlussmechanismus einen aktuierbaren Schließhebel und eine aktuierbare Sicherungseinrichtung zum Sichern des Schließhebels in einer Verschlussstellung, wobei die Sicherungseinrichtung in der Verschlussstellung in den Schließhebel mittels einer vorgespannten Federeinrichtung verrastet. Auf diese Weise kann der Schließhebel gegen ein unbeabsichtigtes Öffnen gesichert sein. Der Schließhebel kann rotierbar in der Gehäusestruktur gelagert sein. Dabei kann sich ein Teilbereich des Schließhebels in der Aussparung derart erstrecken, dass der Teilbereich im Zusammenwirken mit der Gehäusestruktur den Pilzzapfen in der Aussparung in der Verschlussstellung formschlüssig und kraftschlüssig fixiert. Das bedeutet, dass zumindest der Schaft von dem Teilbereich und der Gehäusestruktur umgrenzt ist, wobei der Pilzzapfen entlang der Längsachse des Schafts durch die Außenstruktur und den Pilzkopf beidseits formschlüssig fixiert ist.

Die Federeinrichtung kann sich an der Gehäusestruktur abstützen. Der Pilzzapfen kann zum Beispiel ein Gewinde aufweisen, anhand dessen er an einer Außenstruktur beziehungsweise Rumpfstruktur durch Einschrauben montierbar ist. Insbesondere kann das Gewinde in Verlängerung des Schafts ausgebildet sein, so dass der Pilzzapfen bis auf Anschlag in die Außenstruktur eingeschraubt werden kann.

Gemäß einer Weiterbildung der Erfindung ist die Sicherungseinrichtung durch ein Sperrelement im Zusammenwirken mit einer Druckfeder in der Verschlussstellung gehalten. Somit kann die Verschlussstellung anhand einer zusätzlichen mechanischen Komponente, nämlich dem Sperrelement, gegen ein unbeabsichtigtes Lösen der Sicherungseinrichtung gesichert sein. Das Sperrelement kann durch einen elektromechanischen Aktuator lösbar sein, also die Sicherungseinrichtung freigeben. Wenn das Sperrelement gelöst ist, kann die Sicherungseinrichtung den Schließhebel freigeben, so dass der Schließhebel durch den ihm zugeordneten Aktuator um die Rotationsachse rotierbar ist.

Der dem Schließhebel zugeordnete Aktuator, der der Sicherungseinrichtung zugeordnete Aktuator und der dem Sperrelement zugeordnete Aktuator können jeweils elektromechanisch ausgebildet sein und sich an der Gehäusestruktur abstützen. Ferner kann sich die Druckfeder an der Gehäusestruktur abstützen. Alternativ oder zusätzlich zu den Aktuatoren kann jeweils eine manuelle Betätigungseinrichtung für den Schließhebel, die Sicherungseinrichtung und/oder das Sperrelement vorgesehen sein.

Gemäß einer weiteren Ausführungsform der Erfindung ist ausschließlich der Schaft des Pilzzapfens in der Aussparung aufgenommen. Alternativ können der Schaft und der Pilzkopf gemeinsam in der Aussparung aufgenommen sein, wobei der Pilzkopf zumindest abschnittsweise von der Gehäusestruktur umgrenzt ist.

Gemäß einer weiteren Ausführungsform der Erfindung ist die Rotationsachse senkrecht zu der Längsachse des Schafts orientiert.

Zum Beispiel können der Pilzzapfen, die Gehäusestruktur und/oder der Verschlussmechanismus jeweils unabhängig voneinander aus einem Metall, insbesondere aus Aluminium oder Stahl, oder einer Legierung daraus hergestellt sein.

Darüber hinaus kann die Verriegelungsvorrichtung mindestens eine Sensoreinrichtung umfassen, die einen Zustand des Verschlussmechanismus überwacht, beispielsweise ob der Verschlussmechanismus in der Verschlussstellung ist oder nicht. Weiterhin kann ein Visualisierungsmittel zum Anzeigen eines Zustands des Verschlussmechanismus an der Gehäusestruktur angeordnet sein.

Gemäß einer weiteren Ausführungsform der Erfindung weist die mindestens eine Verriegelungsvorrichtung eine Vielzahl von Verriegelungsvorrichtungen auf, die unabhängig voneinander wirken. Das heißt, jede der Vielzahl von Verriegelungsvorrichtungen kann unabhängig von den anderen der Vielzahl von Verriegelungsvorrichtungen verriegelt oder gelöst werden.

Jede Verriegelungsvorrichtung kann eine elektronische Verbindung zu einem Steuergerät aufweisen. Die Vielzahl von Verriegelungsvorrichtungen sind insbesondere nicht mechanisch miteinander verbunden. Auf diese Weise kann eine Betätigungswelle oder sonstige Wellen, insbesondere verhältnismäßig lange Wellen, eingespart werden. Jede Verriegelungsvorrichtung bildet somit eine unabhängige Funktionseinheit.

Gemäß einer weiteren Ausführungsform der Erfindung ist beim Rotieren des Verschlussmechanismus die Sicherungseinrichtung mittels der Federeinrichtung vorgespannt und beim Erreichen der Verschlussstellung in den Schließhebel einrastet und in Position gehalten wird. Vorzugsweise kann der Schließhebel beim Einführen des Pilzzapfens in die Aussparung in Kontakt mit dem Pilzzapfen kommen und durch den Kontakt solange rotiert werden bis die Verschlussstellung erreicht ist.

Zum Beispiel kann die Verriegelungsvorrichtung durch folgende Schritte entriegelt bzw. geöffnet werden. Der dem Sperrelement zugeordnete Aktuator betätigt das Sperrelement, so dass die Sicherungseinrichtung freigegeben wird. Beispielsweise rotiert der Aktuator das Sperrelement entgegen der Kraftwirkung einer an dem Sperrelement angeordneten Druckfeder. Die Sicherungseinrichtung kann anschließend durch den ihr zugeordneten Aktuator betätigt werden, um den Schließhebel freizugeben. Beispielsweise rotiert der Aktuator die Sicherungseinrichtung entgegen der Kraftwirkung einer an der Sicherungseinrichtung angeordneten Druckfeder. Durch diese Rotation der Sicherungseinrichtung verlässt der Schließhebel eine Einbuchtung der Sicherungseinrichtung. Darauffolgend kann der Schließhebel betätigt werden. Beispielsweise rotiert der Aktuator den Schließhebel entgegen der Kraftwirkung einer an dem Schließhebel angeordneten Federeinrichtung. Der Pilzzapfen wird von dem Schließhebel freigegeben beziehungsweise durch diesen aus der Aussparung heraus geschoben. Ein Schließen bzw. Verriegeln der Luftfahrzeugtür anhand der Verriegelungsvorrichtung kann durch eine umgekehrte Abfolge der zuvor beschriebenen Schritte angewendet werden.

In einer anderen Ausführungsvariante kann die Verriegelungsvorrichtung durch folgende Schritte entriegelt bzw. geöffnet werden. Die Sicherungseinrichtung kann durch den ihr zugeordneten Aktuator betätigt werden, um den Schließhebel freizugeben. Weiterhin kann der Schließhebel um die Rotationsachse rotieren, wobei die Rotationsachse senkrecht zu der Längsachse des Schafts orientiert ist. Durch diese Rotation kann der Pilzzapfen in der größer werdenden Aussparung hin zu einem Einlaufbereich der Aussparung gebracht werden, wobei der Pilzkopf in dem Einlaufbereich translatorisch in Bezug zu der Gehäusestruktur und dem Verschlussmechanismus entlang der Längsachse des Schafts verschiebbar ist. Ein Schließen bzw. Verriegeln der Luftfahrzeugtür anhand der Verriegelungsvorrichtung kann durch eine umgekehrte Abfolge der zuvor beschriebenen Schritte angewendet werden.

Die obigen Ausführungsformen und Weiterbildungen lassen sich, sofern sinnvoll, beliebig miteinander kombinieren. Weitere mögliche Ausführungsformen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand von Ausführungsbeispielen unter Bezugnahme auf die beiliegenden Figuren der Zeichnungen näher erläutert. Von den Figuren zeigen:
- Fig. 1: eine schematische Darstellung eines Luftfahrzeugs mit einer Luftfahrzeugtür gemäß einem Ausführungsbeispiel der Erfindung;
- Fig. 2: eine schematische vergrößerte Darstellung der Luftfahrzeugtür aus Fig. 1 mit einer Verriegelungsvorrichtung gemäß einem weiteren Ausführungsbeispiel der Erfindung;
- Fig. 3A, 3B: eine schematische Perspektivansicht eines Ausschnitts einer Luftfahrzeugtür gemäß einem weiteren Ausführungsbeispiel der Erfindung mit einer Vielzahl von Verriegelungsvorrichtungen vor einem Einführen der Pilzzapfen in den Verschlussmechanismus (Fig. 3A) und in der Verschlussstellung (Fig. 3B);
- Fig. 4: eine schematische Schnittansicht der Verriegelungsvorrichtung aus Fig. 3B;
- Fig. 5: eine schematische Darstellung einer Verriegelungsvorrichtung für eine Luftfahrzeugtür an einer Außenstruktur eines Luftfahrzeugs gemäß einem weiteren Ausführungsbeispiel der Erfindung;
- Fig. 6: eine schematische Darstellung der Verriegelungsvorrichtung aus Fig. 5 in einer entriegelten Stellung;
- Fig. 7: eine schematische Darstellung einer Verriegelungsvorrichtung für eine Luftfahrzeugtür an einer Außenstruktur eines Luftfahrzeugs gemäß einem weiteren Ausführungsbeispiel der Erfindung; und
- Fig. 8: ein Ablaufdiagramm eines Verfahrens zum Verriegeln einer Luftfahrzeugtür unter Verwendung einer Verriegelungsvorrichtung gemäß einem weiteren Ausführungsbeispiel der Erfindung.

In den Figuren der Zeichnung sind gleiche, funktionsgleiche und gleich wirkende Elemente, Merkmale und Komponenten - sofern nichts Gegenteiliges ausgeführt ist - jeweils mit denselben Bezugszeichen versehen.

Obwohl vorliegend spezifische Ausführungsformen und Weiterbildungen dargestellt und beschrieben sind, wird der Fachmann bevorzugen, dass eine Vielzahl von alternativen und/oder gleichartigen Ausführungen die dargestellten und beschriebenen spezifischen Ausführungsbeispiele ersetzen können, ohne vom Umfang der vorliegenden Erfindung abzukehren. Diese Anmeldung soll allgemein alle Abwandlungen oder Änderungen der hierin beschriebenen spezifischen Ausführungsbeispiele abdecken.

Die beiliegenden Figuren sollen ein weiteres Verständnis von Ausführungsformen der Erfindung vermitteln und dienen im Zusammenhang mit der Beschreibung der Erklärung von Prinzipien und Konzepten der Erfindung. Andere Ausführungsbeispiele und viele der genannten Vorteile ergeben sich im Hinblick auf die Zeichnungen. Die Zeichnungen sind lediglich als schematische Zeichnungen zu verstehen und die Elemente der Zeichnungen sind nicht notwendigerweise maßstabsgetreu zueinander dargestellt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

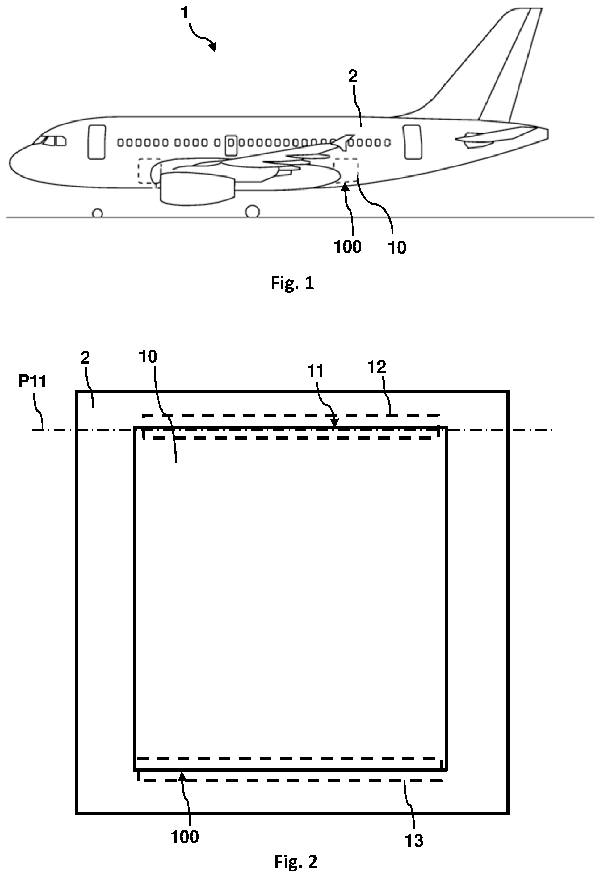

Fig. 1 zeigt eine schematische Darstellung eines Luftfahrzeugs 1 mit einer Luftfahrzeugtür 10 gemäß einem Ausführungsbeispiel der Erfindung.

Beispielhaft ist die Außenstruktur 2 als Rumpf und die Luftfahrzeugtür 10 als Frachttor ausgebildet. Die Luftfahrzeugtür 10 umfasst beispielhaft eine Türstruktur des Luftfahrzeugs 1 sowie mindestens eine Verriegelungsvorrichtung 100. Die Luftfahrzeugtür 10 und die Verriegelungsvorrichtung 100 werden in den nachfolgenden Figuren detailliert beschrieben.

Fig. 2 zeigt eine schematische vergrößerte Darstellung der Luftfahrzeugtür 10 aus Fig. 1 mit einer Verriegelungsvorrichtung 100 gemäß einem weiteren Ausführungsbeispiel der Erfindung.

Die Luftfahrzeugtür 10 umfasst die Türstruktur, welche mittels eines Scharniers 11 an der Außenstruktur 2 des Luftfahrzeugs 1 montiert und relativ zu der Außenstruktur 2 um eine Schwenkachse P11 des Scharniers 11 schwenkbar ist. Das Scharnier 11 ist hier beispielhaft an einem oberen Endbereich 12 der Türstruktur angeordnet, kann jedoch auch an einer anderen Stelle der Türstruktur angeordnet sein.

Die Verriegelungsvorrichtung 100 umfasst beispielhaft einen Pilzzapfen, eine Gehäusestruktur und einen Verschlussmechanismus.

Der Pilzzapfen weist einen Schaft zur Montage an der Außenstruktur 2 und einen Pilzkopf auf. Der Pilzkopf ist an einem von der Außenstruktur 2 abgewandten Ende des Schafts angeordnet, wobei sich eine Längsachse des Schafts zwischen der Außenstruktur 2 und dem Pilzkopf erstreckt.

Die Gehäusestruktur ist zur festen Anbringung an der Luftfahrzeugtür 10 ausgebildet, wobei die Gehäusestruktur eine Aussparung aufweist, die zum Einführen des Pilzzapfens ausgebildet ist. Der Pilzzapfen ist komplementär zu der ihm zugeordneten Aussparung ausgebildet.

Der Verschlussmechanismus ist mit der Gehäusestruktur mechanisch gekoppelt und fixiert den Pilzzapfen in der Aussparung durch Rotieren des Verschlussmechanismus um eine Rotationsachse formschlüssig und kraftschlüssig.

Die Verriegelungsvorrichtung 100 ist an einem dem oberen Endbereich 12 abgewandten unteren Endbereich 13 der Türstruktur befestigt, wobei der Pilzzapfen an der Außenstruktur 2 fixiert ist, wobei die Längsachse des Schafts senkrecht zu der Schwenkachse P11 orientiert ist, hier also die Schwenkachse im Wesentlichen in einer horizontalen Achse und die Längsachse in einer vertikalen Achse.

Insbesondere umfasst die Luftfahrzeugtür 10 hier keine längeren Wellen und Hebel, die zum Beispiel mindestens die Hälfte einer Breite oder Höhe der Luftfahrzeugtür 10 an Länge aufweisen.

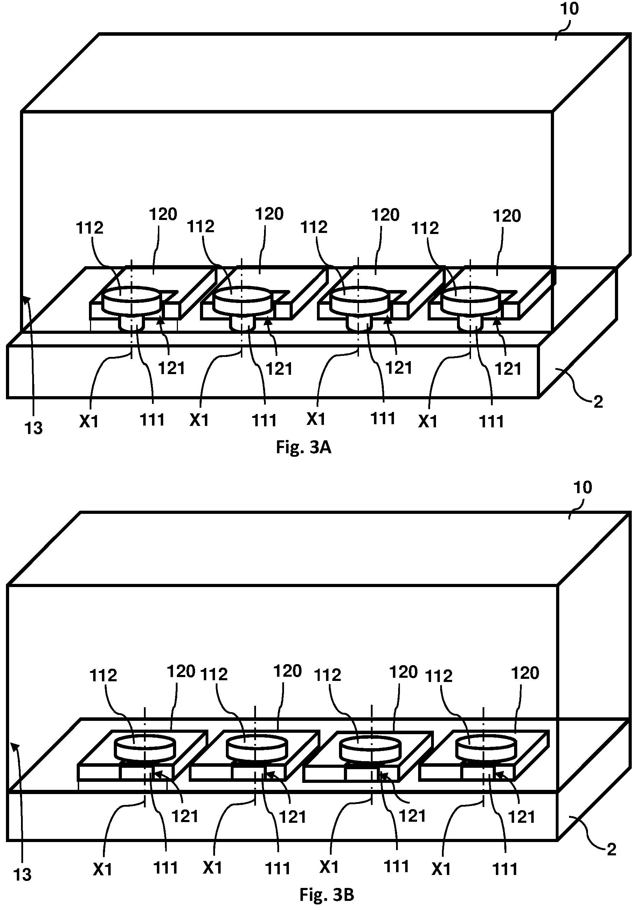

Fig. 3A, 3B zeigen eine schematische Perspektivansicht eines Ausschnitts einer Luftfahrzeugtür 10 gemäß einem weiteren Ausführungsbeispiel der Erfindung mit einer Vielzahl von Verriegelungsvorrichtungen 100 vor einem Einführen der Pilzzapfen 110 in den Verschlussmechanismus 130 (siehe Fig. 3A) und in der Verschlussstellung (siehe Fig. 3B).

Die Vielzahl von Verriegelungsvorrichtungen 100 wirken unabhängig voneinander. Das heißt, jede der Vielzahl von Verriegelungsvorrichtungen 100 kann unabhängig von den anderen der Vielzahl von Verriegelungsvorrichtungen 100 verriegelt oder gelöst werden. Wie in Fig. 3A illustriert, können die Vielzahl von Verriegelungsvorrichtungen 100 in einer Reihe, zum Beispiel parallel zu der Schwenkachse P11 der Luftfahrzeugtür 10, angeordnet sein. Die Vielzahl von Verriegelungsvorrichtungen kann zwei, drei, vier, fünf, sechs, acht oder ein Vielfaches davon Verriegelungsvorrichtungen 100 umfassen, von denen vier beispielhaft in Fig. 3A und 3B dargestellt sind. Die Verriegelungsvorrichtungen 100 selbst können dabei jeweils identisch ausgebildet sein. Unabhängig von der Anzahl der Verriegelungsvorrichtungen 100 können die Verriegelungsvorrichtungen 100 entlang des unteren Endbereichs 13 gleichmäßig verteilt angeordnet sein.

Jede Verriegelungsvorrichtung 100 kann eine elektronische Verbindung zu einem Steuergerät aufweisen. Die Vielzahl von Verriegelungsvorrichtungen 100 sind insbesondere nicht mechanisch miteinander verbunden, wie in den Figuren 3A und 3B erkennbar ist. Auf diese Weise kann eine Betätigungswelle oder sonstige Wellen, insbesondere verhältnismäßig lange Wellen, eingespart werden. Jede Verriegelungsvorrichtung 100 bildet somit eine unabhängige Funktionseinheit.

Jede Verriegelungsvorrichtung 100 umfasst beispielhaft einen Pilzzapfen 110, eine Gehäusestruktur 120 und einen Verschlussmechanismus 130. Der Pilzzapfen 110 weist einen Schaft 111 zur Montage an der Außenstruktur 2 und einen Pilzkopf 112 auf. Der Pilzkopf 112 ist an einem von der Außenstruktur 2 abgewandten Ende des Schafts 111 angeordnet, wobei sich eine Längsachse X1 des Schafts 111 zwischen der Außenstruktur 2 und dem Pilzkopf 112 erstreckt. Wie auch in Fig. 2 entspricht die Längsachse X1 hier einer vertikalen Achse.

Die Gehäusestruktur 120 ist zur festen Anbringung an der Luftfahrzeugtür 10 ausgebildet, wobei die Gehäusestruktur 120 eine Aussparung 121 aufweist, die zum Einführen des Pilzzapfens 110 ausgebildet ist. Der Pilzzapfen 110 ist komplementär zu der ihm zugeordneten Aussparung 121 ausgebildet. Der Verschlussmechanismus 130 ist mit der Gehäusestruktur 120 mechanisch gekoppelt und fixiert den Pilzzapfen 110 in der Aussparung 121 durch Rotieren des Verschlussmechanismus 130 um eine Rotationsachse formschlüssig und kraftschlüssig.

In den Fig. 3A und 3B zeigt der Ausschnitt den unteren Endbereich 13 der Türstruktur. An dem unteren Endbereich 13 der Türstruktur sind die vier Verriegelungsvorrichtungen 100 befestigt. Die Pilzzapfen 110 sind an der Außenstruktur 2 fixiert, wobei die Längsachse X1 des Schafts 111 senkrecht zu der Schwenkachse P11 orientiert ist, hier also die Schwenkachse P11 im Wesentlichen in einer horizontalen Achse und die Längsachse X1 in einer vertikalen Achse.

Beispielhaft ist der Schaft 111 zylindrisch geformt. Der Pilzkopf 112 weist hier zum Beispiel eine scheibenartige Form auf, kann jedoch alternativ eine kuppelartige Form, eine Quaderform, eine Würfelform, eine zylindrische Form oder vergleichbare Formen aufweisen.

Fig. 3B zeigt die Verriegelungsvorrichtungen 100 in einer Verschlussstellung. In der Verschlussstellung ist der Pilzzapfen 110 in dem Verschlussmechanismus 130 formschlüssig und kraftschlüssig fixiert. Der Formschluss liegt dabei in allen Raumrichtungen vor. Der Kraftschluss liegt zumindest senkrecht zu der Längsachse X1 des Schafts 111 vor. Die Luftfahrzeugtür 10 ist in der Verschlussstellung beispielsweise im Wesentlichen flächenbündig mit der Außenstruktur 2 angeordnet. Beispielhaft ist ausschließlich der Schaft 111 des Pilzzapfens 110 in der Aussparung 121 aufgenommen. Der Pilzkopf 112 ist außerhalb der Gehäusestruktur 120 angeordnet. Insbesondere weist der Pilzkopf 112 einen größeren Durchmesser als die Aussparung 121 auf oder bezüglich einer Breite der Aussparung 121.

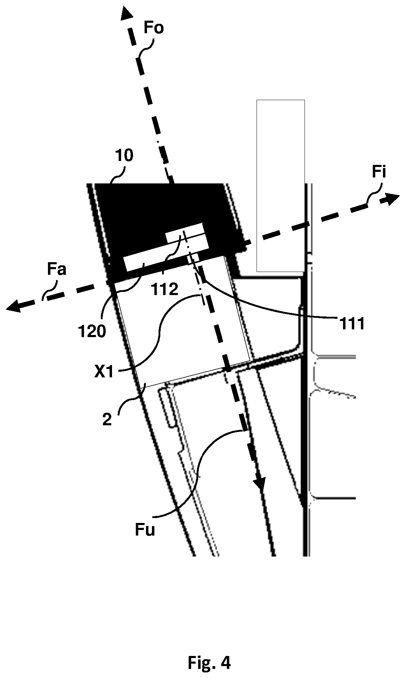

Fig. 4 zeigt eine schematische Schnittansicht der Verriegelungsvorrichtung 100 aus Fig. 3B. Im Speziellen ist die gleiche Verschlussstellung gezeigt wie in Fig. 3B.

Die Verriegelungsvorrichtung 100 kann in der Verschlussstellung Lasten Fo in tangentialer Aufwärtsrichtung, Lasten Fi in Innenrichtung, Lasten Fa in Außenrichtung und Lasten Fu in tangentialer Abwärtsrichtung durch Kontaktflächen des Pilzzapfens 110 aufnehmen, wie sie in Fig. 4 dargestellt sind.

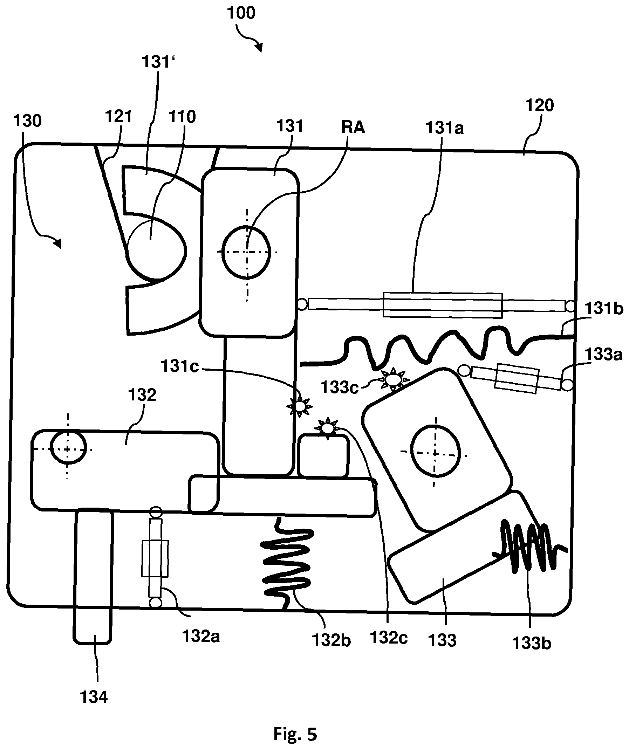

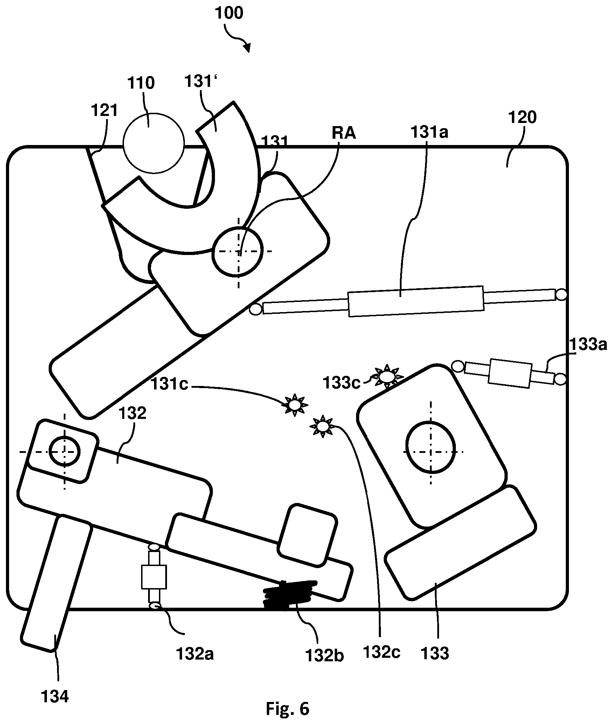

Fig. 5 zeigt eine schematische Darstellung einer Verriegelungsvorrichtung 100 für eine Luftfahrzeugtür 10 an einer Außenstruktur 2 eines Luftfahrzeugs 1 gemäß einem weiteren Ausführungsbeispiel der Erfindung. Im Speziellen ist in Fig. 5 das Innere, insbesondere ein beispielhafter Verschlussmechanismus 130, der Verriegelungsvorrichtung 100 dargestellt. Fig. 6 zeigt eine schematische Darstellung der Verriegelungsvorrichtung 100 aus Fig. 5 in einer entriegelten Stellung.

Die Verriegelungsvorrichtung 100 umfasst einen Pilzzapfen 110, der einen Schaft 111 zur Montage an einer Außenstruktur 2 eines Luftfahrzeugs 1 und einen Pilzkopf 112 aufweist. Der Pilzkopf 112 ist an einem von der Außenstruktur 2 abgewandten Ende des Schafts 111 angeordnet, wobei sich eine Längsachse X1 des Schafts 111 zwischen der Außenstruktur 2 und dem Pilzkopf 112 erstreckt.

Die Verriegelungsvorrichtung 100 umfasst ferner eine Gehäusestruktur 120 zur festen Anbringung an der Luftfahrzeugtür 10, wobei die Gehäusestruktur 120 eine Aussparung 121 aufweist, die zum Einführen des Pilzzapfens 110 ausgebildet ist.

Darüber hinaus umfasst die Verriegelungsvorrichtung 100 einen Verschlussmechanismus 130, der mit der Gehäusestruktur 120 mechanisch gekoppelt ist und den Pilzzapfen 110 in der Aussparung 121 durch Rotieren des Verschlussmechanismus 130 um eine Rotationsachse RA formschlüssig und kraftschlüssig fixiert. Der Pilzzapfen 110 ist komplementär zu der Aussparung 121 ausgebildet, wie es in Fig. 5 illustriert ist. Dabei ist der Pilzzapfen 110 hier im Bereich seines Schafts geschnitten dargestellt.

Weiterhin enthält der Verschlussmechanismus 130 beispielhaft einen aktuierbaren Schließhebel 131 und eine aktuierbare Sicherungseinrichtung 132 zum Sichern des Schließhebels 131 in einer Verschlussstellung umfasst. Diese Verschlussstellung liegt in der Darstellung nach Fig. 5 vor. Die Sicherungseinrichtung 132 verrastet in der Verschlussstellung in den Schließhebel 131 mittels einer vorgespannten Federeinrichtung 132b.

Der Schließhebel 131 kann rotierbar in der Gehäusestruktur 120 gelagert sein. Dabei kann sich ein Teilbereich 131' des Schließhebels 131 in der Aussparung 121 derart erstrecken, dass der Teilbereich 131' im Zusammenwirken mit der Gehäusestruktur 120 den Pilzzapfen 110 in der Aussparung 121 in der Verschlussstellung formschlüssig und kraftschlüssig fixiert. Das bedeutet, dass zumindest der Schaft 111 von dem Teilbereich 131' und der Gehäusestruktur 120 umgrenzt ist, wobei der Pilzzapfen 110 entlang der Längsachse des Schafts 111 durch die Außenstruktur 2 und den Pilzkopf 112 beidseits formschlüssig fixiert ist. Die Federeinrichtung 132b stützt sich an der Gehäusestruktur 120 ab. Der Pilzzapfen 110 kann zum Beispiel ein Gewinde aufweisen, anhand dessen er an einer Außenstruktur 2 durch Einschrauben montierbar ist. Insbesondere kann das Gewinde in Verlängerung des Schafts 111 ausgebildet sein, so dass der Pilzzapfen 110 bis auf Anschlag in die Außenstruktur 2 eingeschraubt werden kann.

Die Rotation des Schließhebels 131 im Uhrzeigersinn kann durch eine Druckfeder 131b unterstützt werden. Aktuiert wird die Rotation durch einen elektromechanischen Aktuator 131a. Der Aktuator 131a und die Druckfeder 131b stützen sich beide an der Gehäusestruktur 120 ab. Die Sicherungseinrichtung 132 kann von einem elektromechanischen Aktuator 132a betätigt werden, wobei sich der Aktuator 132a an der Gehäusestruktur 120 abstützt.

Optional kann die Sicherungseinrichtung 132 durch ein Sperrelement 133 im Zusammenwirken mit einer Druckfeder 133b in der Verschlussstellung gehalten sein. Das in Fig. 5 dargestellte Sperrelement 133 sperrt die Sicherungseinrichtung 132 in dieser Ausrichtung nicht. Es ist für den Fachmann jedoch eindeutig erkennbar, dass ein Rotieren des Sperrelements 133 im Uhrzeigersinn dies bewirken kann. Die Rotation im Uhrzeigersinn kann durch eine Druckfeder 133b unterstützt werden. Aktuiert wird die Rotation durch einen elektromechanischen Aktuator 133a. Der Aktuator 133a und die Druckfeder 133b stützen sich beide an der Gehäusestruktur 120 ab.

Somit kann die Verschlussstellung anhand einer zusätzlichen mechanischen Komponente, nämlich dem Sperrelement 133, gesichert sein. Wenn das Sperrelement 133 gelöst ist, wie in Fig. 5 vorliegt, kann die Sicherungseinrichtung 132 den Schließhebel 131 durch Rotation freigeben, so dass der Schließhebel 131 durch den ihm zugeordneten Aktuator 131a um die Rotationsachse RA rotierbar ist.

Zusätzlich zu dem Aktuator 132a ist hier eine manuelle Betätigungseinrichtung 134 für die Sicherungseinrichtung 132 vorgesehen. Die manuelle Betätigungseinrichtung 134 kann auch als Visualisierungsmittel zum Anzeigen eines Zustands des Verschlussmechanismus 130 an der Gehäusestruktur 120 verwendet werden.

Zum Beispiel können der Pilzzapfen 110, die Gehäusestruktur 120 und/oder der Verschlussmechanismus 130 aus einem Metall, insbesondere aus Aluminium oder Stahl, oder einer Legierung daraus hergestellt sein. Darüber hinaus kann die Verriegelungsvorrichtung 100 Sensoreinrichtungen 131c, 132c, 133c umfassen, die einen Zustand des Verschlussmechanismus 130 überwachen, beispielsweise ob der Verschlussmechanismus 130 in der Verschlussstellung ist oder nicht.

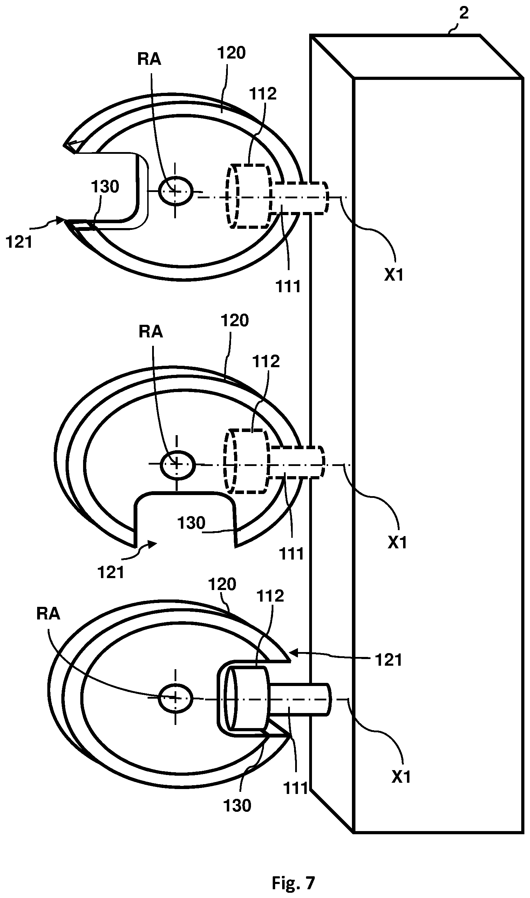

Fig. 7 zeigt eine schematische Darstellung einer Verriegelungsvorrichtung 100 für eine Luftfahrzeugtür 10 an einer Außenstruktur 2 eines Luftfahrzeugs 1 gemäß einem weiteren Ausführungsbeispiel der Erfindung.

Die Verriegelungsvorrichtung 100 umfasst beispielhaft einen Pilzzapfen 110, eine Gehäusestruktur 120 und einen Verschlussmechanismus 130.

Der Pilzzapfen 110 weist einen Schaft 111 zur Montage an der Außenstruktur 2 und einen Pilzkopf 112 auf. Der Pilzkopf 112 ist an einem von der Außenstruktur 2 abgewandten Ende des Schafts 111 angeordnet, wobei sich eine Längsachse X1 des Schafts 111 zwischen der Außenstruktur 2 und dem Pilzkopf 112 erstreckt.

Die Gehäusestruktur 120 ist zur festen Anbringung an der Luftfahrzeugtür 10 ausgebildet, wobei die Gehäusestruktur 120 eine Aussparung 121 aufweist, die zum Einführen des Pilzzapfens 110 ausgebildet ist. Der Pilzzapfen 110 ist komplementär zu der ihm zugeordneten Aussparung 121 ausgebildet.

Der Verschlussmechanismus 130 ist mit der Gehäusestruktur 120 mechanisch gekoppelt und fixiert den Pilzzapfen 110 in der Aussparung 121 durch Rotieren des Verschlussmechanismus 130 um eine Rotationsachse RA formschlüssig und kraftschlüssig.

Der Pilzzapfen 110 ist an der Außenstruktur 2 fixiert, wobei die Längsachse des Schafts 111 senkrecht zu einer Schwenkachse der Luftfahrzeugtür orientiert ist, hier also die Schwenkachse im Wesentlichen in einer vertikalen Achse und die Längsachse in einer horizontalen Achse.

In der Fig. 7 sind drei verschiedene Zustände der Verriegelung nebeneinander dargestellt. Eine Verschlussstellung liegt bei der oberen Verriegelungsvorrichtung 100 vor. In der Verschlussstellung ist der Pilzkopf 112 von der Gehäusestruktur umgrenzt, wobei der Schaft 111 durch eine schmale Stelle der Aussparung 121 aus der Gehäusestruktur 120 hinausragt. Die schmale Stelle ist derart schmal, dass der Pilzkopf 112 nicht hindurch passt. Die mittlere Verriegelungsvorrichtung 100 illustriert eine Zwischenstellung, die während der Rotation des Verschlussmechanismus 130 zwischen der Verschlussstellung und einer geöffneten Stellung vorliegt. Gegenüber der Verschlussstellung ist der Verschlussmechanismus 130 und die Aussparung 121 um 90° gedreht. Während der Rotation gleitet der Schaft 111 in der schmalen Stelle der Aussparung 121. Dabei sind der Schaft 111 und der Pilzkopf 112 gemeinsam in der Aussparung 121 aufgenommen, wobei der Pilzkopf 112 zumindest abschnittsweise von der Gehäusestruktur 120 umgrenzt ist. In der geöffneten Stellung ist der Pilzkopf 112 in einem Einlaufbereich der Aussparung 121 angeordnet, so dass der Pilzkopf 112 in diesem Zustand translatorisch entlang der Rotationsachse RA verschiebbar ist, wie es bei der unteren Verriegelungsvorrichtung 100 illustriert ist. Die Rotationsachse RA ist beispielhaft senkrecht zu der Längsachse X1 des Schafts 111 orientiert. Die untere Verriegelungsvorrichtung 100 entspricht auch einem Einführen des Pilzzapfens 110 in den Verschlussmechanismus 130.

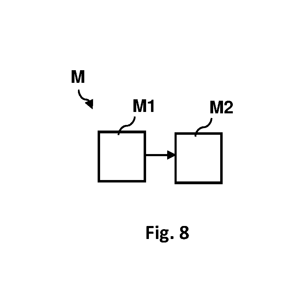

Fig. 8 zeigt ein Ablaufdiagramm eines Verfahrens M zum Verriegeln einer Luftfahrzeugtür 10 unter Verwendung einer Verriegelungsvorrichtung 100 gemäß einem weiteren Ausführungsbeispiel der Erfindung. Die Verriegelungsvorrichtung 100 kann zum Beispiel die Merkmale der Ausführungsbeispiele nach Fig. 1-7 aufweisen.

Das Verfahren M umfasst beispielhaft ein Einführen M1 des Pilzzapfens 110 und ein Rotieren M2 des Verschlussmechanismus 130.

In dem Schritt M1 wird der Pilzzapfen 110 in die Aussparung 121 der Gehäusestruktur 120 eingeführt, wobei der Pilzzapfen 110 an einer Außenstruktur 2 eines Luftfahrzeugs 1 fixiert ist. Die Längsachse X1 des Schafts 111 ist dabei senkrecht zu einer Schwenkachse P11 der Luftfahrzeugtür 10 orientiert.

In dem Schritt M2 wird der Verschlussmechanismus 130 rotiert, um den Pilzzapfen 110 in der Aussparung 121 formschlüssig und kraftschlüssig zu fixieren. Je nach der konkreten Ausgestaltung des Verschlussmechanismus 130 kann dieser um beispielsweise etwa 45° in der Ausführungsform nach Fig. 5 und 6, oder um beispielsweise 180° in der Ausführungsform nach Fig. 7 verdreht werden, um zwischen der geöffneten Stellung und der Verschlussstellung zu wechseln. Darüber hinaus kann die Sicherungseinrichtung 132 mittels der Federeinrichtung 132b vorgespannt sein und beim Erreichen der Verschlussstellung in den Schließhebel 131 einrasten und in Position gehalten werden. Vorzugsweise kann der Schließhebel 131 beim Einführen des Pilzzapfens 110 in die Aussparung 121 in Kontakt mit dem Pilzzapfen 110 kommen und durch den Kontakt solange rotiert werden bis die Verschlussstellung erreicht ist.

Nach Anwendung der Schritte M1 und M2 kann die Verriegelungsvorrichtung 100 beispielhaft, wie in Fig. 3B oder in Fig. 7 gezeigt und beschrieben ist, vorliegen.

Die oben beschriebenen Verfahrensschritte können vorzugsweise in der Reihenfolge ihrer Nennung beziehungsweise Nummerierung ausgeführt werden, sind jedoch nicht auf diese Reihenfolge beschränkt.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Luftfahrzeug
- 2: Außenstruktur
- 10: Luftfahrzeugtür
- 11: Scharnier
- 12: oberer Endbereich der Türstruktur
- 13: unterer Endbereich der Türstruktur
- 100: Verriegelungsvorrichtung
- 110: Pilzzapfen
- 111: Schaft des Pilzzapfens
- 112: Pilzkopf
- 120: Gehäusestruktur
- 121: Aussparung
- 130: Verschlussmechanismus
- 131: Schließhebel
- 131': Teilbereich des Schließhebels
- 131a: Aktuator am Schließhebel
- 131b: Druckfeder am Schließhebel
- 131c: Sensoreinrichtung am Schließhebel
- 132: Sicherungseinrichtung
- 132a: Aktuator an der Sicherungseinrichtung
- 132b: Federeinrichtung an der Sicherungseinrichtung
- 132c: Sensoreinrichtung an der Sicherungseinrichtung
- 133: Sperrelement
- 133a: Aktuator am Sperrelement
- 133b: Druckfeder am Sperrelement
- 133c: Sensoreinrichtung am Sperrelement
- 134: manueller Betätigungshebel

- X1: Längsachse des Schafts
- RA: Rotationsachse des Verschlussmechanismus
- P11: Schwenkachse der Luftfahrzeugtür

- M: Verfahren
- M1: Einführen des Pilzzapfens
- M2: Rotieren des Verschlussmechanismus

## Patentansprüche

1. Verriegelungsvorrichtung (100) für eine Luftfahrzeugtür (10) an einer Außenstruktur (2) eines Luftfahrzeugs (1), die Verriegelungsvorrichtung (100) aufweisend:
einen Pilzzapfen (110), der einen Schaft (111) zur Montage an einer Außenstruktur (2) eines Luftfahrzeugs (1) und einen Pilzkopf (112) aufweist, wobei der Pilzkopf (112) an einem von der Außenstruktur (2) abgewandten Ende des Schafts (111) angeordnet ist, wobei sich eine Längsachse (X1) des Schafts (111) zwischen der Außenstruktur (2) und dem Pilzkopf (112) erstreckt;
eine Gehäusestruktur (120) zur festen Anbringung an einer Luftfahrzeugtür (10), wobei die Gehäusestruktur (120) eine Aussparung (121) aufweist, die zum Einführen des Pilzzapfens (110) ausgebildet ist; und
einen Verschlussmechanismus (130), der mit der Gehäusestruktur (120) mechanisch gekoppelt ist und den Pilzzapfen (110) in der Aussparung (121) durch Rotieren des Verschlussmechanismus (130) um eine Rotationsachse (RA) formschlüssig und kraftschlüssig fixiert.

2. Verriegelungsvorrichtung (100) nach Anspruch 1, wobei der Verschlussmechanismus (130) einen aktuierbaren Schließhebel (131) und eine aktuierbare Sicherungseinrichtung (132) zum Sichern des Schließhebels (131) in einer Verschlussstellung umfasst, wobei die Sicherungseinrichtung (132) in der Verschlussstellung in den Schließhebel (131) mittels einer vorgespannten Federeinrichtung (132b) verrastet.

3. Verriegelungsvorrichtung (100) nach Anspruch 2, wobei die Sicherungseinrichtung (132) durch ein Sperrelement (133) im Zusammenwirken mit einer Druckfeder (133b) in der Verschlussstellung gehalten ist.

4. Verriegelungsvorrichtung (100) nach einem der vorhergehenden Ansprüche, wobei ausschließlich der Schaft (111) des Pilzzapfens (110) in der Aussparung (121) aufgenommen ist.

5. Verriegelungsvorrichtung (100) nach einem der Ansprüche 1 bis 3, wobei die Rotationsachse (RA) senkrecht zu der Längsachse (X1) des Schafts (111) orientiert ist.

6. Luftfahrzeugtür (10), insbesondere Frachttor, für ein Luftfahrzeug (1), die Luftfahrzeugtür (10) aufweisend:
eine Türstruktur eines Luftfahrzeugs (1), wobei die Türstruktur mittels eines Scharniers (11) an einer Außenstruktur (2) des Luftfahrzeugs (1) montierbar und relativ zu der Außenstruktur (2) um eine Schwenkachse (P11) des Scharniers (11) schwenkbar ist, wobei das Scharnier (11) an einem oberen Endbereich (12) der Türstruktur angeordnet ist; und
mindestens eine Verriegelungsvorrichtung (100) nach einem der vorhergehenden Ansprüche, wobei die mindestens eine Verriegelungsvorrichtung (100) an einem dem oberen Endbereich (12) abgewandten unteren Endbereich (13) der Türstruktur befestigt ist, wobei der Pilzzapfen (110) an der Außenstruktur (2) fixiert ist, wobei die Längsachse (X1) des Schafts (111) senkrecht zu der Schwenkachse (P11) orientiert ist.

7. Luftfahrzeugtür (10) nach Anspruch 6, wobei die mindestens eine Verriegelungsvorrichtung (100) eine Vielzahl von Verriegelungsvorrichtungen (100) aufweist, die unabhängig voneinander wirken.

8. Luftfahrzeug (1) mit einer Luftfahrzeugtür (10) nach Anspruch 6 oder 7.

9. Verfahren (M) zum Verriegeln einer Luftfahrzeugtür (10) unter Verwendung einer Verriegelungsvorrichtung (100) nach einem der Ansprüche 1 bis 5, das Verfahren (M) umfassend:
Einführen (M1) des Pilzzapfens (110) in die Aussparung (121) der Gehäusestruktur (120), wobei der Pilzzapfen (110) an einer Außenstruktur (2) eines Luftfahrzeugs (1) fixiert ist, wobei die Längsachse (X1) des Schafts (111) senkrecht zu einer Schwenkachse (P11) der Luftfahrzeugtür (10) orientiert ist; und
Rotieren (M2) des Verschlussmechanismus (130), um den Pilzzapfen (110) in der Aussparung (121) formschlüssig und kraftschlüssig zu fixieren.

10. Verfahren (M) nach Anspruch 9, wobei beim Rotieren (M2) des Verschlussmechanismus (130) die Sicherungseinrichtung (132) mittels der Federeinrichtung (132b) vorgespannt ist und beim Erreichen der Verschlussstellung in den Schließhebel (131) einrastet und in Position gehalten wird.
